# EUROPÄISCHE PATENTSCHRIFT

(11) **EP 3 943 793 B1**
(45) Veröffentlichungstag und Bekanntmachung des Hinweises auf die Patenterteilung: **15.11.2023**
(21) Anmeldenummer: 21172199.8
(22) Anmeldetag: 05.05.2021
(51) Int. Cl.: F16L 3/10, F16L 3/11

(54) **ROHRSCHELLE ZUR BEFESTIGUNG EINES ROHRES AN EINER WAND**
PIPE CLAMP FOR FIXING A PIPE TO A WALL
COLLIER DE SERRAGE POUR TUYAUX DESTINÉ À LA FIXATION D'UN TUYAU À UN MUR

(30) Priorität: 22.07.2020 DE 102020209227
(43) Veröffentlichungstag der Anmeldung: 26.01.2022
(73) Patentinhaber: RÖSLE GROUP GmbH, 87616 Marktoberdorf (DE)
(72) Erfinder: Klempp, Henning, 97906 Bad Rappenau (DE)
(74) Vertreter: Dr. Weitzel & Partner

(56) Entgegenhaltungen:
- EP-A1- 0 115 246
- EP-A1- 0 713 039
- EP-A1- 2 913 574
- WO-A1-2017/168034
- DE-U1- 20 013 752
- DE-U1-202014 000 265
- DE-U1-202017 107 712
- GB-A- 1 499 653

## Beschreibung

Die vorliegende Erfindung betrifft eine Rohrschelle zur Befestigung eines Rohres, insbesondere eines Fallrohres beispielsweise als Bestandteil eines Dachentwässerungssystems, an einer Wand, wobei die Wand insbesondere zumindest im Wesentlichen vertikal ausgerichtet ist.

Eine gattungsgemäße Rohrschelle wird in DE 20 2014 000 265 U1 offenbart. Diese Rohrschelle weist einen Wandmontageabschnitt mit einem Befestigungsmittel zur Wandbefestigung auf, sowie zwei gelenkig aneinander angeschlossene Klemmschenkel, deren ersten Enden voneinander lösbar sind, um die Rohrschelle über ein Rohr zu schieben, und deren zweiten Enden gelenkig aneinander angeschlossen sind. Zum Verbinden der beiden ersten Enden der Klemmschenkel im über das Rohr geschobenen Zustand der Klemmschenkel ist eine Verbindungseinrichtung mit einem Schnappverschluss vorgesehen. Die beiden Klemmschenkel, die im Querschnitt in einem Axialschnitt durch das Rohr gesehen C-förmig sind, sind innen mit elastischen Druckelementen ausgekleidet, die ausreichend nachgiebig sind, um die Schnappverbindung zu verriegeln.

Nachteilig an der genannten Ausführungsform ist, dass ein Spiel zwischen der Rohrschelle und dem Rohr ausreichend groß sein muss, um die gewünschte Verriegelung der Schnappverbindung zu erreichen. Da die Elastizität der Druckelemente in der Praxis begrenzt ist und der Außendurchmesser von mit der Rohrschelle zu befestigenden Rohren variieren kann, kann mit der Rohrschelle häufig keine ausreichende reibschlüssige Anlage der Rohrschelle beziehungsweise der Druckelemente außen am Rohr erreicht werden, die Gewichtskräfte des Rohres aufnehmen kann. Damit droht ein entsprechendes Fallrohr sich am oberen Ende beispielsweise von einem Dachrinnenstutzen zu lösen, weil es innerhalb der Rohrschelle nach unten rutschen kann. Somit wird erforderlich, dass das Fallrohr meist in großer Höhe wieder oben am Stutzen angeschlossen werden muss.

Weitere Rohrschellen zur Befestigung eines Rohres, hierunter auch von anderen Rohren als ein Fallrohr, wie es die vorliegende Erfindung besonders betrifft, werden in EP 2 894 385 A1, DE 200 13 752 U1, DE 102 15 647 A1, DE 101 23 924 B4, DE 100 39 008 C2, EP 0 713 039 A1, DE 198 42 739 C1, CN 105570544 A, DE 20 2012 103 440 U1, DE 10 2017 124 068 A1, DE 10 2017 113 903 A1, DE 10 2015 112 963 A1, DE 10 2012 106 256 B4, DE 10 2008 047 787 B4 und DE 10 2004 032 053 B4 offenbart, wobei allen Ausführungsformen gemein ist, dass sie entweder Ratsch- oder Schnappverschlüsse mit den genannten Nachteilen oder radial nach außen gebogene Abkantungen aufweisen, die miteinander verriegelt sind und die zum einen optisch nicht besonders ansprechend sind und zum anderen Sammelstellen für Schmutz sind, sowie sich in der Praxis als verletzungsträchtige Stoßstellen herausgestellt haben.

DE 20 2017 107 712 U1 offenbart eine Rohrschelle mit Gelenk, umfassend ein oberes Schellenteil und ein unteres Schellenteil, die über das Gelenk miteinander verbunden sind. Die Schellenteile werden durch Isolierkörper gebildet, in welche Spannbügel eingebettet sind, die Abkantungen radial nach außen aufweisen.

EP 2 913 574 A1 offenbart eine Rohrschelle mit zwei separaten C-förmigen Schellenteilen, die formschlüssig miteinander verbunden werden können.

GB 1 499 653 A offenbart eine Klemmvorrichtung für Rohre mit zwei miteinander verschraubten Teilen.

WO 2017/168034 A1 offenbart eine Klemmvorrichtung für Rohre mit zwei Klemmteilen, die radial nach innen gerichtete Abkantungen aufweisen.

Eine weitere Rohrschelle mit Abkantungen radial nach außen wird in EP 0 115 246 A1 offenbart.

Der vorliegenden Erfindung liegt die Aufgabe zugrunde, eine Rohrschelle zur Befestigung eines Rohres, insbesondere eines Fallrohres beispielsweise zur Dachentwässerung, an einer Wand, insbesondere zumindest im Wesentlichen vertikalen Wand, anzugeben, bei welcher die genannten Nachteile vermieden werden. Die Rohrschelle soll sich durch ein ansprechendes Design und ein sicheres Halten des Rohres auszeichnen.

Die erfindungsgemäße Aufgabe wird durch eine Rohrschelle mit den Merkmalen von Anspruch 1 gelöst. In den abhängigen Ansprüchen werden vorteilhafte und besonders zweckmäßige Gestaltungen der Erfindung angegeben.

Die erfindungsgemäße Rohrschelle zur Befestigung eines Rohres, insbesondere Fallrohres, beispielsweise Regenwasserfallrohres, an einer Wand weist wenigstens einen Wandmontageabschnitt auf, der ein Befestigungsmittel zur Wandbefestigung umfasst. Bei dem Befestigungsmittel kann es sich in einem einfachen Fall um einen Schlagdorn beziehungsweise Stahlnagel oder auch um eine Bohrung handeln. Gemäß einer anderen Ausführungsform umfasst das Befestigungsmittel beispielsweise ein Gewinde, insbesondere Innengewinde, sodass die Rohrschelle mit einer entsprechend in das Innengewinde eingedrehte Gewindestange oder Schraube an der Wand befestigt werden kann.

Die erfindungsgemäße Rohrschelle weist zwei sich bogenförmig jeweils von einem ersten Ende zu einem zweiten Ende erstreckende, am zweiten Ende gelenkig oder lösbar aneinander angeschlossene Klemmschenkel auf, die zum gemeinsamen bogenförmigen Umgreifen des Rohres angeordnet sind und von denen wenigstens einer den Wandmontageabschnitt umfasst.

Erfindungsgemäß ist eine Verbindungseinrichtung zum lösbaren Verbinden der beiden ersten Enden der Klemmschenkel vorgesehen.

Gemäß der Erfindung weist die Verbindungseinrichtung jeweils eine radial nach innen gerichtete Abkantung an jedem ersten Ende der Klemmschenkel auf und die beiden Abkantungen sind mittels eines sich in Umfangsrichtung erstreckenden Schraubverbindung in der Umfangsrichtung gegeneinander verspannt, zumindest wenn die Schraubverbindung angezogen ist und insbesondere ein Rohr in dem von den Klemmschenkeln umschlossenen Raum, vorliegend auch als Rohrraum bezeichnet, durch die Klemmschenkel vorteilhaft reibschlüssig gehalten wird.

Die Schraubverbindung ermöglicht eine flexible Anpassung des Abstandes der beiden Abkantungen an den jeweiligen Anwendungsfall und damit eine Anpassung des inneren Durchmessers der aneinander angeschlossenen Klemmschenkel, sodass Rohre, insbesondere Fallrohre, ungeachtet eines variierenden Außendurchmessers sicher reibschlüssig gehalten werden können.

Mit Umfangsrichtung ist vorliegend die Umfangsrichtung entlang des Rohres gemeint, das heißt die Umfangsrichtung des von den Klemmschenkeln im an beiden Enden miteinander befestigten Zustand umschlossenen Rohrraumes.

Gemäß einer vorteilhaften Ausführungsform der Erfindung weist eine der beiden Abkantungen an dem ersten Ende ein Innengewinde auf und/oder an einer der beiden Abkantungen ist ein ein Innengewinde aufweisendes Konterelement angeschlossene, und die andere der beiden Abkantungen weist eine Durchgangsbohrung auf. In einem angezogenen Zustand der Schraubverbindung ist eine Kopfschraube mit ihrem Schraubenkopf direkt oder mittelbar anliegend an der anderen der beiden Abkantungen durch die Durchgangsbohrung gesteckt und in das Innengewinde eingeschraubt. Somit erstreckt sich ein Schraubenschaft von seinem mit einem Gewinde versehenen freien Ende, das in das Innengwinde eingeschraubt ist, durch die Durchgangsbohrung hindurch bis zu dem auf der vom Innengewinde abgewandten Seite der die Durchgangsbohrung aufweisenden Abkantung positionierten Schraubenkopf.

Gemäß einer anderen vorteilhaften Ausführungsform weisen die beiden Abkantungen ein Innengewinde und/oder ein ein Innengewinde aufweisendes Konterelement auf. Somit kann in beiden Abkantungen jeweils ein Innengewinde vorgesehen sein und/oder an beiden Abkantungen ist jeweils ein ein Innengewinde aufweisendes Konterelement angeschlossen. Alternativ kann auch nur eine Abkantung ein Innengewinde aufweisen und an der jeweils anderen Abkantung ist das Konterelement mit dem Innengewinde angeschlossen. In einem angezogenen Zustand der Schraubverbindung ist eine einen Antrieb aufweisende Gewindestange in die Innengewinde eingeschraubt, um die Schraubverbindung auszubilden.

Bevorzugt ist der Antrieb als Außenantrieb ausgeführt und zwischen den beiden Abkantungen angeordnet. Somit kann der Außenantrieb beispielsweise als Sechskant ausgeführt sein und damit leicht mit einem Maulschlüssel, der zwischen die beiden Abkantungen gesteckt wird, angezogen werden.

Bei der Ausführungsform mit einem Innengewinde und mit einer Kopfschraube weist bevorzugt der Klemmschenkel, der an seinem ersten Ende die Abkantung mit der Durchgangsbohrung aufweist, fluchtend zur Durchgangsbohrung eine Antriebsöffnung in Form eines Langlochs auf, und der Schraubenkopf weist einen Antrieb in Form eines durch die Antriebsöffnung hindurch betätigbaren Innenantriebs auf. Somit kann beispielsweise ein Innensechskantschlüssel oder ein Innensechsrundschlüssel/Sternschlüssel von außen durch die Antriebsöffnung hindurch in den Innenantrieb gesteckt werden, um die Schraubverbindung anzuziehen.

Erfindungsgemäß weisen die Klemmschenkel eine C-Form auf, mit sich entlang ihres Umfangs erstreckenden, radial nach innen gerichteten Umkantungen, zwischen denen elastische Druckelemente, insbesondere aus formstabilem Gummi, angeordnet sind, die in der Radialrichtung nach innen über die Umkantungen und die Abkantungen zur reibschlüssigen Anlage an dem Rohr hervorstehen. Die C-Form ergibt sich somit in einem Axialschnitt durch das Rohr beziehungsweise durch den Rohrraum. Es kann ein einziges Druckelement vorgesehen sein, das sich entlang von beiden Klemmschenkeln erstreckt, oder es können mehrere Druckelemente, insbesondere je Klemmschenkel ein Druckelement, vorgesehen sein.

Die Druckelemente können sich vorteilhaft jeweils vom zweiten Ende bis zu dem ersten Ende erstrecken und im Bereich der ersten Enden stirnseitige Aussparungen aufweisen, in denen jeweils ein Teil der Schraubverbindung, insbesondere ein Konterelement und ein Schraubenkopf oder jeweils ein Konterelement aufgenommen ist. Alternativ enden die Druckelemente in der Umfangsrichtung mit einem ausreichenden Abstand vor den Abkantungen, um eine Kollision mit der Verbindungseinrichtung beziehungsweise der Schraubverbindung zu vermeiden.

Die Klemmschenkel können bevorzugt an ihrem zweiten Ende mit einem Scharnier verbunden sein, sodass sie unverlierbar aneinandergehalten werden. Gemäß einer anderen Ausführungsform kann jedoch hier ebenfalls eine lösbare Verbindungseinrichtung vorgesehen sein, die dann besonders vorteilhaft entsprechend der Verbindungseinrichtung an den ersten Enden, insbesondere identisch zu dieser, ausgeführt ist.

Die beiden Klemmschenkel erstrecken sich insbesondere jeweils über mehr als 160° in der Umfangsrichtung.

Verschiedene Durchmessertoleranzen des Rohres werden bevorzugt über einen im angezogenen Zustand der Schraubverbindung in der Umfangsrichtung zwischen den Abkantungen verbleibenden Abstand ausgeglichen.

Die Erfindung soll nachfolgend anhand von Ausführungsbeispielen und den Figuren exemplarisch beschrieben werden.

Es zeigen:
- Figur 1: eine dreidimensionale Ansicht einer erfindungsgemäß ausgeführten Rohrschelle;
- Figur 2: die Rohrschelle aus der Figur 1 in einer axialen schematischen Draufsicht;
- Figur 3: einen vergrößerten Ausschnitt mit der Verbindungseinrichtung an den ersten Enden der Klemmschenkel;
- Figur 4: eine abweichende Verbindungseinrichtung in einem der Figur 3 entsprechenden Ausschnitt.

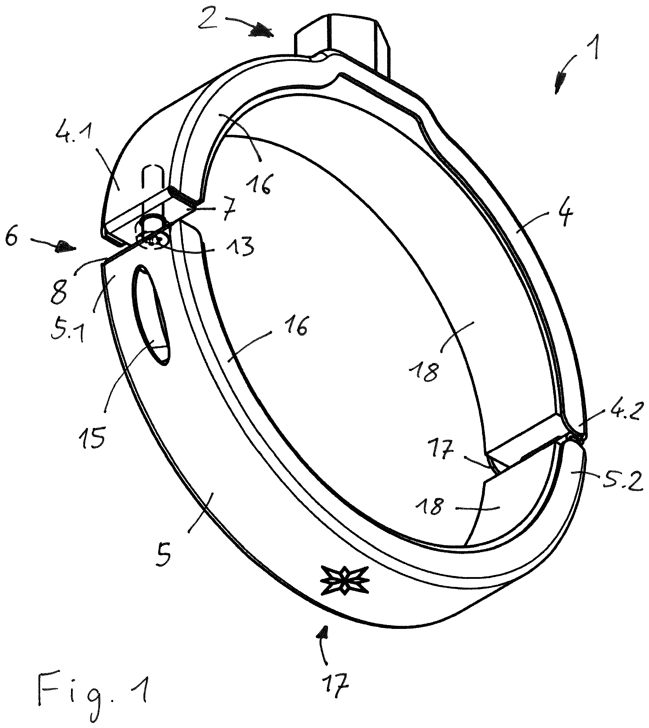

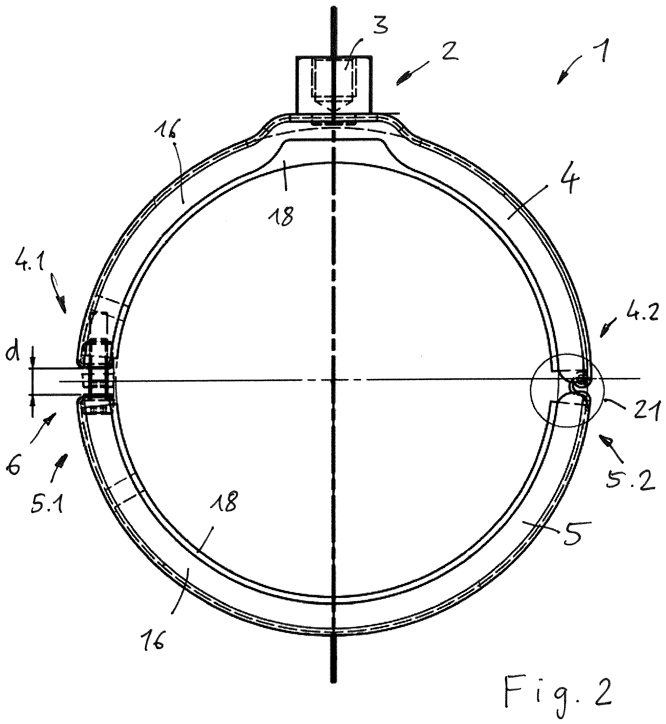

In der Figur 1 ist eine erfindungsgemäß ausgeführte Rohrschelle 1 in einer dreidimensionalen Draufsicht dargestellt. Die Rohrschelle 1 weist einen Wandmontageabschnitt 2 mit einem Befestigungsmittel 3 (siehe die Figur 2) zur Wandbefestigung auf. Wie man aus der Figur 2 erkennen kann, ist das Befestigungsmittel 3 vorliegend als Innengewinde ausgeführt, das in einem sechskantförmigen Zapfen der Rohrschelle 1 angeordnet ist. Andere Befestigungsmittel kommen jedoch in Betracht.

Die Rohrschelle 1 weist zwei Klemmschenkel 4, 5 auf, die zum gemeinsamen bogenförmigen Umgreifen des Rohres angeordnet sind und von denen wenigstens einer, hier der erste Klemmschenkel 4, den Wandmontageabschnitt 2 umfasst.

Jeder Klemmschenkel 4,5 weist ein erstes Ende 4.1, 5.1 und ein zweites Ende 4.2, 5.2 auf. An ihren zweiten Enden 4.2, 5.2 sind die beiden Klemmschenkel 4, 5 gelenkig miteinander verbunden, hier mittels eines Scharniers 21. Somit können die Klemmschenkel 4, 5 auseinander geklappt werden, um über ein hier nicht näher dargestelltes Rohr geschoben zu werden. Wenn sie über das Rohr geschoben wurden, können sie wieder zusammengeklappt werden, sodass sie außen auf der Rohroberfläche anliegen und an ihren ersten Enden 4.1, 5.1 mit einer Verbindungseinrichtung 6 verbunden werden.

Die Klemmschenkel 4, 5 sind, wie man aus der Figur 1 erkennen kann, C-förmig und weisen jeweils zwei Umkantungen 16, 17 auf. In der Axialrichtung des nicht näher dargestellten Rohres sind die Umkantungen 16, 17 an entgegengesetzten Enden der Klemmschenkel 4, 5 angeordnet, um die C-Form im Querschnitt der Klemmschenkel 4, 5 auszubilden. In die C-Form der Klemmschenkel 4, 5 ist jeweils ein Druckelement 18 eingelegt. Die Druckelemente 18 stehen radial nach innen über die Umkantungen 16, 17 hervor und sind aus einem elastischen Material, beispielsweise Gummi, hergestellt. Beim Schließen der Verbindungseinrichtung 6 werden die Druckelemente 18 mit ihrer radial inneren Oberfläche außen auf das Rohr gedrückt, sodass ein Reibschluss entsteht, der ein Rutschen des Rohres innerhalb der Rohrschelle 1 verhindert.

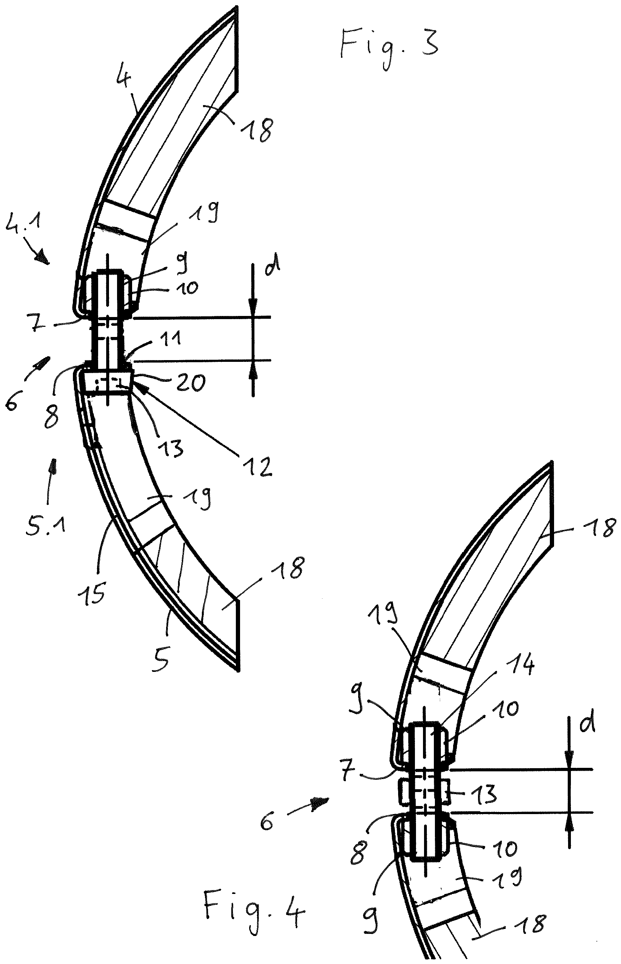

Erfindungsgemäße Ausführungen der Verbindungseinrichtung 6 sind in den Figuren 3 und 4 dargestellt. So weisen die beiden Klemmschenkel 4, 5 an ihren ersten Enden 4.1, 5.1 jeweils eine Abkantung 7, 8 auf, die radial nach innen gerichtet, also in Richtung des Rohrraumes beziehungsweise des Rohres gerichtet ist. Die Abkantungen 7, 8 sind in der Umfangsrichtung mit einer Schraubverbindung gegeneinander verspannt, wobei auch im verspannten Zustand vorteilhaft ein Abstand d zwischen den Abkantungen 7, 8 verbleibt.

Bei der Ausführungsform gemäß der Figur 3 weist die Abkantung 8 eine Durchgangsbohrung 11 auf und an der Abkantung 7 ist ein mit einem Innengewinde 9 versehenes Konterelement 10 angeordnet. Beispielsweise ist das Konterelement 10 stoffschlüssig mit der Abkantung 7 verbunden oder mit diesem verpresst. Durch die Durchgangsbohrung 11 ist eine Kopfschraube 12 gesteckt, sodass ihr Schraubenkopf 20 zumindest mittelbar an der Abkantung 8 anliegt und ihr Außengewinde in das Innengewinde 9 der anderen Abkantung 7 eingeschraubt ist.

Der Schraubenkopf 20 weist einen Antrieb 13 in Form eines Innenantriebs auf, der durch eine Antriebsöffnung 15 im Bereich des zweiten Endes 5.2 des Klemmschenkels 5 angetrieben werden kann, siehe hierzu auch die Figur 1.

Die Ausgestaltung gemäß der Figur 4 unterscheidet sich von der Ausgestaltung gemäß der Figur 3 darin, dass beide Abkantungen 7, 8 jeweils mit einem Innengewinde 9 beziehungsweise mit einem ein Innengewinde 9 aufweisenden Konterelement 10 versehen sind. In die Innengewinde 9 ist eine Gewindestange 14 mit einem Antrieb 13 in Form eines Außenantriebs, der zwischen den Abkantungen 7, 8 angeordnet ist, eingeschraubt. Somit kann eine Antriebsöffnung in den Klemmschenkeln 4, 5 entfallen, weil der Antrieb 13 radial von außen über den Spalt zwischen den Abkantungen 7, 8 betätigbar ist.

Um eine Kollision der Verbindungseinrichtung 6 mit den Druckelementen 18 zu vermeiden, weisen diese an ihren den ersten Enden 4.1, 5.1 zugeordneten Enden jeweils eine Aussparung 19 auf. Diese Aussparungen 19 erstrecken sich zum Beispiel nur über einen mittleren Bereich der Druckelemente 18, bezogen auf die Axialrichtung des Rohres beziehungsweise des Rohrraumes. Alternativ enden die Druckelemente 18 mit einem entsprechenden Abstand in der Umfangsrichtung vor den Abkantungen 7, 8.

### Bezugszeichenliste

- 1: Rohrschelle
- 2: Wandmontageabschnitt
- 3: Befestigungsmittel
- 4: Klemmschenkel
- 5: Klemmschenkel
- 4.1, 5.1: erstes Ende
- 4.2, 5.2: zweites Ende
- 6: Verbindungseinrichtung
- 7: Abkantung
- 8: Abkantung
- 9: Innengewinde
- 10: Konterelement
- 11: Durchgangsbohrung
- 12: Kopfschraube
- 13: Antrieb
- 14: Gewindestange
- 15: Antriebsöffnung
- 16: Umkantung
- 17: Umkantung
- 18: Druckelement
- 19: Aussparung
- 20: Schraubenkopf
- 21: Scharnier
- d: Abstand

## Patentansprüche

1. Rohrschelle (1) zur Befestigung eines Rohres an einer Wand;
mit einem Wandmontageabschnitt (2), der ein Befestigungsmittel (3) zur Wandbefestigung umfasst;
mit zwei sich bogenförmig jeweils von einem ersten Ende (4.1, 5.1) zu einem zweiten Ende (4.2, 5.2) erstreckenden, am zweiten Ende (4.2, 5.2) gelenkig oder lösbar aneinander angeschlossenen Klemmschenkeln (4, 5), die zum gemeinsamen bogenförmigen Umgreifen des Rohres angeordnet sind und von denen wenigstens einer den Wandmontageabschnitt (2) umfasst;
mit einer Verbindungseinrichtung (6) zum lösbaren Verbinden der beiden ersten Enden (4.1, 5.1) der Klemmschenkel (4, 5); wobei die Verbindungseinrichtung (6) jeweils eine radial nach innen gerichtete Abkantung (7, 8) an jedem ersten Ende (4.1, 5.1) der Klemmschenkel (4, 5) aufweist und die beiden Abkantungen (7, 8) mittels einer sich in Umfangsrichtung erstreckenden Schraubverbindung in der Umfangsrichtung gegeneinander verspannt sind;
und wobei die Rohrschelle ein oder mehrere elastische Druckelemente aufweist, wobei die Klemmschenkel (4, 5) eine C-Form aufweisen, mit sich entlang ihres Umfangs erstreckenden, radial nach innen gerichteten Umkantungen (16, 17), zwischen denen die ein oder mehrere elastische Druckelemente (18) angeordnet sind, die in der Radialrichtung nach innen über die Umkantungen (16, 17) und die Abkantungen (7, 8) zur reibschlüssigen Anlage an dem Rohr hervorstehen.

2. Rohrschelle (1) gemäß Anspruch 1, **dadurch gekennzeichnet, dass** eine der beiden Abkantungen (7, 8) ein Innengewinde (9) aufweist und/oder an einer der beiden Abkantungen (7, 8) ein ein Innengewinde (9) aufweisendes Konterelement (10) angeschlossen ist, die andere der beiden Abkantungen (7, 8) eine Durchgangsbohrung (11) aufweist und in einem angezogenen Zustand der Schraubverbindung eine Kopfschraube (12) mit ihrem Schraubenkopf (20) anliegend an der anderen der beiden Abkantungen (7, 8) durch die Durchgangsbohrung (11) gesteckt und in das Innengewinde (9) eingeschraubt ist.

3. Rohrschelle (1) gemäß Anspruch 1, **dadurch gekennzeichnet, dass** die beiden Abkantungen (7, 8) ein Innengewinde (9) und/oder ein ein Innengewinde (9) aufweisendes Konterelement (10) aufweisen und in einem angezogenen Zustand der Schraubverbindung eine einen Antrieb (13) aufweisende Gewindestange (14) in die Innengewinde (9) eingeschraubt ist.

4. Rohrschelle (1) gemäß Anspruch 3, **dadurch gekennzeichnet, dass** der Antrieb (13) als Außenantrieb zwischen den beiden Abkantungen (7, 8) angeordnet ist.

5. Rohrschelle (1) gemäß Anspruch 2, **dadurch gekennzeichnet, dass** der Klemmschenkel (4, 5), der an seinem ersten Ende (4.1, 5.1) die Abkantung (7, 8) mit der Durchgangsbohrung (11) aufweist, fluchtend zur Durchgangsbohrung (11) eine Antriebsöffnung (15) in Form eines Langlochs aufweist, und der Schraubenkopf (20) einen Antrieb (13) in Form eines durch die Antriebsöffnung (15) hindurch betätigbaren Innenantriebs aufweist.

6. Rohrschelle (1) gemäß einem der Ansprüche 1 bis 5, **dadurch gekennzeichnet, dass** die elastischen Druckelemente (18) aus formstabilem Gummi hergestellt sind.

7. Rohrschelle (1) gemäß Anspruch 6, **dadurch gekennzeichnet, dass** sich die Druckelemente (18) jeweils vom zweiten Ende (4.2, 5.2) bis zum ersten Ende (4.1, 5.1) erstrecken und im Bereich der ersten Enden (4.1, 5.1) stirnseitige Aussparungen (19) aufweisen, in denen jeweils ein Teil der Schraubverbindung, insbesondere das oder die Konterelemente (10) oder der Schraubenkopf (20), aufgenommen ist.

8. Rohrschelle (1) gemäß einem der Ansprüche 1 bis 7, **dadurch gekennzeichnet, dass** die Klemmschenkel (4, 5) an ihren zweiten Enden (4.2, 5.2) mit einem Scharnier (21) verbunden sind.

9. Rohrschelle (1) gemäß einem der Ansprüche 1 bis 8, **dadurch gekennzeichnet, dass** die beiden Klemmschenkel (4, 5) sich jeweils über mehr als 160° in der Umfangsrichtung erstecken.

10. Rohrschelle (1) gemäß einem der Ansprüche 1 bis 9, **dadurch gekennzeichnet, dass** im angezogenen Zustand der Schraubverbindung in der Umfangsrichtung ein Abstand (d) zwischen den Abkantungen (7, 8) vorgesehen ist.

## Claims

1. Pipe clamp (1) for fastening a pipe to a wall;
having a wall mounting section (2) comprising a fastening means (3) for wall mounting;
having two clamping legs (4, 5) which extend arcuately in each case from a first end (4.1, 5.1) to a second end (4.2, 5.2), are connected to one another in an articulated or detachable manner at the second end (4.2, 5.2), are arranged to engage around the pipe together in an arcuate manner and of which at least one comprises the wall-mounting section (2);
having a connecting device (6) for releasably connecting the two first ends (4.1, 5.1) of the clamping legs (4, 5); wherein
the connecting device (6) has in each case a radially inwardly directed bend (7, 8) at each first end (4.1, 5.1) of the clamping legs (4, 5), and the two bends (7, 8) are braced against each other in the circumferential direction by means of a screw connection extending in the circumferential direction;
and wherein the pipe clamp has one or more elastic pressure elements, wherein the clamping legs (4, 5) have a C-shape, with radially inwardly directed folded edges (16, 17) extending along their circumference, between which the one or more elastic pressure elements (18) are arranged, which project inwardly in the radial direction beyond the folded edges (16, 17) and the bends (7, 8) for frictionally engaged contact with the pipe.

2. Pipe clamp (1) according to claim 1, **characterized in that** one of the two bends (7, 8) has an internal thread (9) and/or a counter element (10) having an internal thread (9) is connected to one of the two bends (7, 8), and the other of the two bends (7, 8) has a through-hole (11), and in a tightened state of the screw connection, a cap screw (12) is inserted with its screw head (20) resting against the other of the two bends (7, 8) through the through-hole (11) and screwed into the internal thread (9).

3. Pipe clamp (1) according to claim 1, **characterized in that** the two bends (7, 8) have an internal thread (9) and/or a counter element (10) having an internal thread (9) and, in a tightened state of the screw connection, a threaded rod (14) having a drive (13) is screwed into the internal thread (9).

4. Pipe clamp (1) according to claim 3, **characterized in that** the drive (13) is arranged as an external drive between the two bends (7, 8).

5. Pipe clamp (1) according to claim 2, **characterized in that** the clamping leg (4, 5), which has the bend (7, 8) with the through-hole (11) at its first end (4.1, 5.1), has a drive opening (15) in the form of an elongated hole in alignment with the through-hole (11), and the screw head (20) has a drive (13) in the form of an internal drive which can be actuated through the drive opening (15).

6. Pipe clamp (1) according to one of claims 1 to 5, **characterized in that** the elastic pressure elements (18) are made of dimensionally stable rubber.

7. Pipe clamp (1) according to claim 6, **characterized in that** the pressure elements (18) extend in each case from the second end (4.2, 5.2) to the first end (4.1, 5.1) and, in the region of the first ends (4.1, 5.1), have end recesses (19) in which in each case a part of the screw connection, in particular the counter element or elements (10) or the screw head (20), is accommodated.

8. Pipe clamp (1) according to one of claims 1 to 7, **characterized in that** the clamping legs (4, 5) are connected at their second ends (4.2, 5.2) to a hinge (21).

9. Pipe clamp (1) according to one of claims 1 to 8, **characterized in that** the two clamping legs (4, 5) extend in each case over more than 160° in the circumferential direction.

10. Pipe clamp (1) according to one of the claims 1 to 9, **characterized in that** in the tightened state of the screw connection, a distance (d) is provided between the bends (7, 8) in the circumferential direction.

## Revendications

1. Collier pour tuyau (1) pour fixer un tuyau sur une paroi,
avec une partie de montage mural (2) qui comprend un moyen de fixation (3) pour la fixation au mur ;
avec deux bras de serrage (4, 5) qui s'étendent chacun en arc de cercle d'une première extrémité (4.1, 5.1) à une deuxième extrémité (4.2, 5.2) et sont reliés l'un à l'autre de façon articulée ou pouvant être défaite à leur deuxième extrémité (4.2, 5.2), disposés de façon à entourer ensemble le tuyau en formant un arc de cercle et dont au moins un comprend la partie de montage mural (2) ;
avec un dispositif d'assemblage (6) pour l'assemblage pouvant être défait des deux premières extrémités (4.1, 5.1) des bras de serrage (4, 5),
le dispositif d'assemblage (6) comportant un chanfrein (7, 8) dirigé vers l'intérieur dans le sens radial à chaque première extrémité (4.1, 5.1) des bras de serrage (4, 5) et les deux chanfreins (7, 8) étant serrés l'un contre l'autre dans le sens de la circonférence au moyen d'un assemblage vissé qui s'étend dans le sens de la circonférence
et le collier pour tuyau comportant un ou plusieurs éléments de compression élastiques,
dans lequel les bras de serrage (4, 5) sont en forme de C, avec des replis (16, 17) dirigés vers l'intérieur dans le sens radial qui s'étendent le long de leur circonférence et entre lesquels sont disposés les un ou plusieurs éléments de compression élastiques (18), qui dépassent dans le sens radial vers l'intérieur au-delà des replis (16, 17) et des chanfreins (7, 8) en vue d'un appui par friction sur le tuyau.

2. Collier pour tuyau (1) selon la revendication 1, **caractérisé en ce que** l'un des deux chanfreins (7, 8) comporte un filetage intérieur (9) et/ou un contre-élément (10) comportant un filetage intérieur (9) est relié à l'un des deux chanfreins (7, 8), l'autre des deux chanfreins (7, 8) comporte un perçage traversant (11) et, quand l'assemblage vissé est serré, une vis à tête (12) est insérée à travers le perçage traversant (11) en posant sa tête de vis (20) contre l'autre des deux chanfreins (7, 8) et vissée dans le filetage intérieur (9).

3. Collier pour tuyau (1) selon la revendication 1, **caractérisé en ce que** les deux chanfreins (7, 8) comportent un filetage intérieur (9) et/ou un contre-élément (10) comportant un filetage intérieur (9) et, quand l'assemblage vissé est serré, une tige filetée (14) comportant un entraînement (13) est vissée dans le filetage intérieur (9).

4. Collier pour tuyau (1) selon la revendication 3, **caractérisé en ce que** l'entraînement (13) est disposé sous la forme d'un entraînement extérieur entre les deux chanfreins (7, 8).

5. Collier pour tuyau (1) selon la revendication 2, **caractérisé en ce que** le bras de serrage (4, 5) qui comporte à sa première extrémité (4.1, 5.1) le chanfrein (7, 8) muni du perçage traversant (11) comporte dans l'alignement du perçage traversant (11) une ouverture d'entraînement (15) en forme de trou oblong et la tête de vis (20) comporte un entraînement (13) sous la forme d'un entraînement intérieur pouvant être actionné à travers l'ouverture d'entraînement (15).

6. Collier pour tuyau (1) selon l'une des revendications 1 à 5, **caractérisé en ce que** les éléments de compression élastiques (18) sont fabriqués en caoutchouc de forme stable.

7. Collier pour tuyau (1) selon la revendication 6, **caractérisé en ce que** les éléments de compression (18) s'étendent chacun de la deuxième extrémité (4.2, 5.2) à la première extrémité (4.1, 5.1) et comportent au niveau des premières extrémités (4.1, 5.1) des découpes (19) sur la face d'extrémité dans chacune desquelles est logée une partie de l'assemblage vissé, en particulier le ou les contre-éléments (10) ou la tête de vis (20).

8. Collier pour tuyau (1) selon l'une des revendications 1 à 7, **caractérisé en ce que** les bras de serrage (4, 5) sont reliés à leur deuxième extrémité (4.2, 5.2) par une charnière (21).

9. Collier pour tuyau (1) selon l'une des revendications 1 à 8, **caractérisé en ce que** les deux bras de serrage (4, 5) s'étendent chacun sur plus de 160° dans le sens de la circonférence.

10. Collier pour tuyau (1) selon l'une des revendications 1 à 9, **caractérisé en ce qu'**une distance (d) est prévue dans le sens de la circonférence entre les chanfreins (7, 8) quand l'assemblage vissé est serré.
